# EUROPEAN PATENT SPECIFICATION

(11) **EP 2 709 440 B1**
(45) Date of publication and mention of the grant of the patent: **02.05.2018**
(21) Application number: 12723155.3
(22) Date of filing: 16.05.2012
(51) Int. Cl.: A01G 9/10, A01G 31/00

(54) **GROWTH SUBSTRATE PRODUCTS AND THEIR USE**
WACHSTUMSSUBSTRATPRODUKTE UND DEREN VERWENDUNG
PRODUITS DE SUBSTRAT DE CROISSANCE ET LEUR USAGE

(30) Priority: 17.05.2011 EP 11166334
(43) Date of publication of application: 26.03.2014
(73) Proprietor: Rockwool International A/S, 2640 Hedehusene (DK)
(72) Inventor: HEMPENIUS, Eelke Gjalt, NL-6653 BX Deest (NL); JANSSEN, Frank Hendrikus Peter, NL-5988 ES Helden (NL); CUYPERS, Jean Marie Wilhelmus, NL-6067 CX Linne (NL)
(74) Representative: Gill Jennings & Every LLP
(86) International application number: PCT/EP2012/059202
(87) International publication number: WO 2012/156483

(56) References cited:
- EP-A1- 0 310 501
- WO-A1-96/02127
- WO-A1-96/03858
- WO-A1-2008/028923
- JP-A- H09 271 278
- US-A- 4 777 763
- US-A1- 2009 300 985
- DATABASE WPI Week 198551 Thomson Scientific, London, GB; AN 1985-322268 XP002662643, -& SU 1 161 021 A1 (PHYSICAL CHEM INST) 15 June 1985 (1985-06-15) cited in the application

## Description

The invention relates to novel growth substrate products formed of man-made vitreous fibres (MMVF) and their use as substrates for the growth of plants, especially peppers and other slow-germinating crops. It also relates to methods of using these products for the growth of plants, including peppers.

It is well-known in the technical field of commercial growth of various crops to provide an artificial growth substrate in the form of a block of MMVF bonded with binder, having an upper surface provided with a recess which is adapted to receive a seed or young plant, into which the seed or plant is positioned for growth, optionally within a smaller plug of bonded MMVF.

It is conventional in the industry to provide different types of growth substrate products for different stages of growth. This means that the amount of water, nutrients and oxygen available to the plant can be optimised for the relevant stage.

Within this broad area, it is also known to provide growth substrate products in the form of blocks which are designed for use in the germination and propagation stage, namely the earliest stage of plant development. Such products give generally good results for a wide variety of crop types.

US4777763 describes a plant growing medium having density which is less than 4.5, preferably less than 3.0, pounds per cubic foot (namely less than 72 kg/m³, preferably less than 48 kg/m³) which is formed of glass fibres bonded together with binder. The binder content is described as 5 to 20% LOI. This product, described as a plant-growing board, is said to be for general use but does not mention any particular plant species or discuss particular problems that arise with certain types of plants, such as peppers and other slow-germinating crops.

SU 1161021 describes a two-layer substrate for cultivation of plants. The density of the upper layer is said to be 60 to 90 kg/m³ and the density of the lower layer is said to be 100 to 130 kg/m³. The embodiments are all of total height 12 cm or 9 cm and the two layers are either identical in thickness or the upper layer is half the thickness of the lower layer. There is a description of results in Table 1 of this document which describes, in the final column, shrinkage on moistening which is said to be in the range 4 to 6 (and in one case 15 to 20) wt%. There is no discussion at all of binder in the substrate, in terms either of type or amount. The exemplified products are used for substrates for growth of carnation flowers.

We have found that, in particular for crop types which tend to develop more slowly in the germination and propagation stage, such as bell peppers, conventional types of block can lead to certain problems. For instance, there is a high risk, especially in the winter period, of fungal growth. There is, again in colder, wetter conditions, also a greater risk of excess water in the substrates and inferior rooting-in and rooting-through.

It is also important to achieve, at the same time, both good handling properties for the block and a suitable environment for germination and root development and rooting-through. In modern propagation and growing facilities there is an increased level of automation which places higher demands on the handling properties of the block.

Accordingly the invention provides growth substrate products formed of MMVF which address problems, which arise particularly in colder conditions, of poor rooting-in and rooting-through; excessive moisture in the blocks around the young plant; and risk of fungal growth. Such problems can arise particularly in the case of certain species of plants including woody plants such as roses and peppers, which are particularly slow-germinating crops. Plants such as these have a high tendency to develop problems when using standard all-purpose propagation blocks.

According to a first aspect of the invention we provide a growth substrate product as claimed in independent claim 1 formed of a coherent matrix of man-made vitreous fibres (MMVF) bonded with binder, having an upper surface provided with a recess adapted to receive a seed or seedling and an opposite lower surface on which the product rests when in use, the product being formed of at least two layers including an upper layer positioned at the upper surface and having a first density and a lower layer positioned at the lower surface and having a second density, wherein the first density is less than the second density by at least 5 kg/m³, wherein the loss on ignition (LOI) in the upper layer is at least 3.5 wt %, and wherein the second density is in the range of 65 to 90kg/m³.

We find that this combination of properties leads to a growth substrate product which can be used for a variety of crops, and in particular is beneficial for growth of peppers (namely, sweet peppers) and other slow-germinating crops, for instance woody plants such as roses. It is also particularly useful for use during the winter period, as it is in this period that the majority of propagation of pepper plants takes place.

We find that the provision of an upper layer having a density lower than the density of a lower layer contributes to a water distribution over the height of the growth substrate product which minimises the risk of excess water around the young plants, and in particular around its roots. This minimises the risks of water-logging and growth inhibition and of fungal growth. It is believed that the presence of the lower layer having a relatively high density contributes to prevention of excessive water level in the upper layer.

At the same time, the fact of the upper layer having a relatively low density is also believed to contribute to ease of rooting-in and rooting-through for the roots of the young plant.

The combination of these properties with ensuring that the LOI in the upper layer is relatively high, namely at least 3.5 wt %, the LOI being dependent on the content of binder, means that the mechanical and handling and transport properties of the block remain good, despite the lower density of the upper layer.

The choice of a higher density lower layer is contrary to common practice in the field of MMVF growth substrate products. Where a variation in density has been provided in the past, this is normally in such a way that the upper layer has the higher density, so as to generate a distribution of water over height which is as
uniform as possible, and to secure a high enough level of water and nutrients in the top layer.

In a second aspect the invention provides use of the growth substrate product of the first aspect of the invention, as claimed in independent claim 12, as a substrate for the growth of a plant crop, generally from seeds or seedlings. Preferably these are pepper or woody plants, most preferably pepper.

In a third aspect of the invention we provide a method of growing a plant crop, as claimed in independent claim 14, comprising providing a growth substrate according to the first aspect of the invention, positioning a seed or seedling in the recess and allowing growth. As with the second aspect of the invention, the plants are preferably pepper or woody plants, most preferably pepper.

Since the features of having a lower density in the upper layer and a higher density in the lower layer are particularly beneficial in the context of growing pepper and certain other crops, in the present disclosure we provide a method of growing a crop, selected from pepper and woody plants, preferably pepper, comprising providing a growth substrate which is a coherent matrix of man-made vitreous fibres (MMVF) bonded with binder and having an upper surface provided with a recess adapted to receive a seed or seedling and an opposite lower surface on which the growth substrate rests when in use, wherein the product is formed of at least two layers including an upper layer positioned at the upper surface and having a first density and a lower layer positioned at the lower surface and having a second density, and wherein the first density is less than the second density by at least 5kg/m³. Preferably the LOI of the upper layer is at least 3.5 wt %. Further, we disclose the use of a growth substrate which is a coherent matrix of man-made vitreous fibres (MMVF) bonded with binder and having an upper surface provided with a recess adapted to receive a seed or seedling and an opposite lower surface on which the growth substrate rests when in use, wherein the product is formed of at least two layers including an upper layer positioned at the upper surface and having a first
density and a lower layer positioned at the lower surface and having a second density, and wherein the first density is less than the second density by at least 5 kg/m³, as the substrate for the growth of a crop selected from pepper and woody plants, preferably pepper. Preferably the LOI of the upper layer is at least 3.5 wt %. We also find that it can be valuable, especially in the growth of a pepper crop, to provide a substrate which does not need to be a dual-density substrate provided that the density is relatively low and the LOI is relatively high. Such a product also provides a combination of good handling and mechanical properties whilst allowing good rooting-in and rooting-through even for slow-germinating crops and even in the winter period.

Thus, we disclose a method of growing a plant crop comprising providing a growth substrate product formed of a coherent matrix of man-made vitreous fibres (MMVF) bonded with binder, the product having an upper surface provided with a recess adapted to receive a seed or seedling wherein the density of the product is not more than 70 kg/m³ and the loss on ignition (LOI) is at least 3.5 wt/%, the method comprising positioning in the recess for growth a seed or seedling, and allowing growth, wherein the crop is selected from pepper and woody plants.

In the invention the growth substrate product is a coherent matrix of MMVF bonded with binder.

In general the product can be formed of any of the types of man-made vitreous fibre which are conventionally known for production of growth substrates. Thus, the mineral fibres employed may be any man-made vitreous fibres (MMVF), such as glass fibres, ceramic fibres, basalt fibres, slag wool, stone wool and others, but are usually stone wool fibres. Stone wool generally has a content of iron oxide (calculated as Fe₂O₃) at least 3% and content of alkaline earth metals (calcium oxide and magnesium oxide) from 10 to 40%, along with the other usual oxide constituents of mineral wool. These are silica; alumina; alkali metals (sodium oxide and potassium oxide) which are usually present in low amounts; and can also include titania and other minor oxides.

Fibre diameter is often in the range of 3 to 20 microns, in particular 5 to 10 microns, as conventional.

The growth substrate is in the form of a coherent mass. That is, the growth substrate is generally a coherent matrix of mineral wool fibres, which has been produced as such, but can also be formed by granulating a slab of mineral wool and consolidating the granulated material.

Preferably the fibres are arranged predominantly in the vertical direction. This has the advantage of allowing better root growth than other orientations and enables the provision of a robust substrate which is useful during transplantation to the next stage. The use of a growth substrate which is formed of at least three layers, as discussed in more detail below, is particularly advantageous in the case where the fibres in the upper layer are arranged predominantly in the vertical direction.

In general, the growth substrate product may be of any appropriate shaped including cylindrical, cuboidal and cubic.

The growth substrate may be in any of the known forms for growth substrate products, such as those usually known as plugs and blocks.

Thus, the mineral wool growth substrate product may have dimensions conventional for the product type commonly known as a plug. For instance the height may be in the range 20 to 35 mm. The length and width may each be in the range 15 to 25 mm. In this case the substrate is often substantially cylindrical with the end surfaces of the cylinder forming the top and bottom surfaces of the growth substrate. The volume of the growth substrate in this case is often not more than 50 cm³, preferably not more than 40 cm³.

Other types of substrate to which the invention may be applied include so-called macro plugs having diameter 40 to 50 mm and height 40 to 60 mm.

However, the invention is particularly useful when the growth substrate product is in the form commonly known as a block, having volume in the range 400 to 1200 cm³, in particular not more than 1000 cm³, preferably in the range 500 to 900 cm³, in particular not more than 800 cm³.

In the case of a block the height is preferably in the range 4 to 15 cm, preferably at least 5 cm, in particular at least 6 cm. Preferably it is not more than 12 cm, in particular not more than 10 cm, especially not more than 9 cm.

The length and width may independently vary in the range 5 to 20cm, preferably in the range 8 to 15 cm.

Growth substrate products according to the invention can be used in methods as described in our international patent publication WO2010/003677. Thus, the growth substrates of the invention may be used in a method of growing a fruit or vegetable crop comprising:
positioning a plant in the form of a seed or seedling or a cutting of the crop in a first coherent MMVF growth substrate having a volume not more than 150cm³,
allowing the plant to root and grow for at least two days and not more than 30 days,
then transferring the plant within the first coherent MMVF growth substrate so that the first coherent MMVF growth substrate is in contact with a second coherent MMVF growth substrate having volume 60 to 1500cm³ and allowing the plant to grow for a further 2 to 5 weeks,
transferring the plant within the second coherent MMVF growth substrate so that the second coherent MMVF growth substrate is in contact with a third coherent MMVF growth substrate having volume of from 700 to 45000cm³,
and allowing the plant to grow for a further 1 to 7 weeks before any further transfer is effected.

The growth substrate product of the present invention may be used as the first MMVF growth substrate in such a method, in which case it is preferably also of the type commonly known as a plug discussed above.

The growth substrate product of the invention may also be used as the second coherent MMVF growth substrate in such a method and may thus have volume 60 to 1500cm³. Volume is preferably at least 70cm³, and can be at least 110cm³. Preferably it is not more than 500cm³, in particular not more than 200cm³.

In this case preferably the height of the growth substrate product is in the range 4 to 12cm, especially in the range 5 to 12cm. Preferably width and length are independently in the range 3 to 15cm, in particular in the range 4 to 10cm.

In a preferred form of such a growth substrate the recess in the upper surface is adapted so as to receive a seed or, more usually, a seedling, already positioned within a smaller growth substrate product, the smaller growth substrate product fitting within the recess.

Additionally, the MMVF product of the invention may be of the type described above as the third MMVF growth substrate and have volume from 700 to 45000cm³. Volume is often at least 750cm³, preferably at least 1000cm³. Volume is preferably not more than 30000cm³, more preferably not more than 20000cm³. In particular it is not more than 15000cm³.

The height of such a growth substrate product is preferably in the range 6.5 to 20cm, especially at least 10cm. Width is preferably in the range 10 to 30cm and length is preferably in the range 15 to 75cm.

In this case also the recess in the upper surface can preferably be configured so as to receive a seedling or young plant already positioned within a smaller growth substrate which fits into the recess.

The height of the growth substrate product is the vertical distance between the upper and lower surfaces when the substrate is positioned as intended to be used. The width and length are the horizontal distances perpendicular to this height.

The product is formed of at least two layers including an upper layer positioned at the upper surface and a lower surface positioned at the lower surface. These layers have different densities, wherein the density of the upper layer (first density) is less than the density of the lower layer (second density) by at least 5 kg/m³.

If intermediate layer(s) are included then preferably these have density intermediate between the first density and the second density. In another preferred embodiment a growth substrate is formed of three layers in which the density of the intermediate layer is greater than the densities of each of the upper and lower layers. This embodiment and its particular advantages are discussed further below.

Most preferably the product consists of the upper layer and the lower layer and does not have an intermediate layer. Thus, it is preferred that essentially only two different densities are provided throughout the height of the product.

The first density is less than the second density by at least 5 kg/m³, preferably by at least 10 kg/m³.

The first density is preferably not more than 70 kg/m³, more preferably not more than 65 kg/m³. Generally, especially in the case of a two-layer product, it is at least 45 kg/m³, preferably at least 55 kg/m³.

The density of the lower layer is at least 65 kg/m³ and not more than 90 kg/m³.

The height of the upper layer is preferably greater than the height of the lower layer. In particular the height of the lower layer, as a proportion of the total height of the growth substrate product, is in the range 5 to 40%, preferably 10 to 40%, more preferably 20 to 40%.

Preferably the height of the upper layer, relative to the total height of the product, is in the range 60 to 90%, preferably 60 to 80%.

In a further aspect of the invention as claimed in independent claim 11, the growth substrate product has three layers. The density of the upper layer is in the range 35 to 50 kg/m³; the density of the intermediate layer is in the range 55 to 70 kg/m³; and the density of the lower layer is in the range 45 to 60 kg/m³.

As discussed above, the relatively low density of the upper layer allows fast rooting-in, which is particularly advantageous for crops such as pepper and woody plants, for instance roses. Also as discussed above, the density of the lower layer, which is at least 5 kg/m³ greater than the density of the upper layer, gives rise to the advantage that the presence of excessive water in the upper layer is prevented. However, since the density of the lower layer is not more than 60 kg/m³, then this also assists in ease of drainage from the lower layer in use.

Generally the intermediate layer in this embodiment has the highest density of the three layers. This has the advantage that it leads to more efficient use of the growth substrate by the plant roots. The greater density of this layer forces the roots to penetrate more slowly and to have a greater horizontal distribution. This is especially advantageous in embodiments where the fibre orientation in the upper layer is substantially vertical, as mentioned above, since such embodiments tend to discourage horizontal root growth in favour of vertical root growth. In embodiments having an intermediate layer it is preferred that the fibre orientation is substantially horizontal to aid in the encouragement of horizontal root development.

In this embodiment, it can be preferred for the three layers to have essentially the same height as each other, so that each provides around one third of the height of the growth substrate.

In general each layer can have a height ranging from 1.5 to 4 cm. Height less than 1.5 cm can lead to production problems.

Three-layer growth substrates of this type are preferably in the form of a block discussed above and have height preferably in the range 5 to 12 cm, preferably 5 to 9 cm. They may also be provided in the form of larger blocks having height in the range 7.5 to 12 centimetres.

In this embodiment the upper layer shows an LOI of at least 3.5 weight % but it has also been found that it is possible to operate this particular embodiment with LOI below this (but not according to the invention), for instance at least 2.5 weight %, in particular when the density of the upper layer is particularly low.

Therefore we disclose a growth substrate product formed of a coherent matrix of man-made vitreous fibres (MMVF) bonded with binder, having an upper surface provided with a recess adapted to receive a seed or seedling and an opposite lower surface on which the product rests when in use, the product being formed of at least three layers including an upper layer positioned at the upper surface and having a density in the range 35 to 50 kg/m³ and a lower layer positioned at the opposite lower surface and having a density in the range 45 to 60 kg/m³ and an intermediate layer positioned between the upper and lower layers and having a density in the range 55 to 70 kg/m³.

Preferably the loss on ignition (LOI) in the upper layer is at least 2.5 weight %. Preferably the density in the upper layer is not more than 45 kg/m³, more preferably not more than 40 kg/m³. Other preferred features are discussed above in connection with the three-layer embodiment. The growth substrate is particularly useful as a growth substrate in a method of growing a plant crop comprising providing the growth substrate product, positioning in the recess for growth a seed or seedling, and allowing growth, when the crop is selected from pepper and woody plants, especially pepper.

In all aspects of the invention choice of the relative densities and proportions of the upper and lower layers and any intermediate layers is done so that the average density across the product is preferably in the range of 60 to 80 kg/m³.

The upper surface is provided with a recess adapted to receive a young plant such as a seed or seedling. This can be in the usual forms known as seed holes.

Such recesses can be dimensioned so as to receive a seed or seedling alone. Alternatively, the recess is of a form such that it is adapted to receive a seed or seedling in the form of a smaller growth substrate product containing a seed, or, more usually, a seedling which has been germinated previously. Thus in a preferred embodiment the growth substrate product of the invention is in the form described above as a block and has a recess adapted to receive a smaller growth substrate of the form described above as a plug.

Generally the entire recess is within the upper layer. The recess can for instance have a cylindrical, frustoconical, cuboidal or conical configuration. Preferably it is cylindrical.

The coherent growth substrate product is formed of MMVF bonded with binder.

In the invention it is essential that the LOI of the upper layer is at least 3.5 wt %. Preferably the LOI of the lower layer and any other layers is also at least 3.5 wt % so that the LOI of the product as a whole is at least 3.5 wt %.

The amount of binder is high relative to conventional products and is such that the loss on ignition in the upper layer is at least 3.5 wt %. Preferably the LOI in the upper layer is at least 3.7 wt %, more preferably at least 3.9 wt %. It is generally not more than 5.3 wt %.

The LOI in any intermediate layers and independently in the lower layer is preferably also at least 3.5 wt %, more preferably at least 3.7 wt %, in particular at least 3.9 wt %. It is generally not more than 5.3 wt %.

The Loss on Ignition (LOI) of the mineral fibre product is a measure of the amount of organic material, such as binder, and wetting agent if used, and other additives if used, in the MMVF product. The LOI of a dry sample may be measured using section 16 of BS2972, 1989 (Method 1). The LOI of the upper layer is at least 3.5 wt %, preferably up to 5.3 wt %, especially preferably 3.8 to 4.5 wt %. The LOI of the upper layer can be at least 4 wt %. In plugs in particular it is preferably at least 4.5 wt %.

A higher LOI means the product is stronger. This means it is less likely to be damaged during use, especially during automated processing, for instance at a propagation facility. A further advantage of higher binder content is that a smoother seed bed/hole can be formed in growth substrates such as plugs and blocks that are commonly provided with a seed hole. A smoother seed hole means that the seed is more likely to propagate from the ideal position in the seed bed/hole. The seed is additionally less likely to bounce out of the desired area, and/or be caught in another part of the mineral fibre product. Accurate positioning of seeds leads to greater uniformity of the resulting crop which is advantageous for the propagator.

The binder is often an organic binder, which is generally heat-curable. Thus the growth substrate product is a coherent matrix MMVF connected by cured binder. The binder can be an organic hydrophobic binder, and in particular it can be a conventional heat-curable (thermosetting), hydrophobic binder of the type which has been used for MMVF growth substrates (and other MMVF-based products). This has the advantage of convenience and economy. Thus the binder can be a phenyl formaldehyde resin or urea formaldehyde resin, such as phenyl urea formaldehyde (PUF) resin. The binder can be a hydrophilic binder, for instance as described in EP 1889859A. Alternatively, it can be a formaldehyde-free binder, such as in WO 2008/028923 or EP 1047645A, or phenol-free as in WO 2008/089849.

However, in the invention, we find that it is particularly beneficial to be able to use a formaldehyde-free binder or a phenol-free binder. This is especially valuable given that high levels of binder are used with which the growing plants will be in contact.

The binder composition prior to curing preferably comprises (a) reaction product of a polycarboxylic acid component and an alkanolamine component. In particular the binder composition prior to curing preferably comprises, in addition to this reaction product, a sugar component. Preferably the binder composition prior to curing also contains (b) a sugar component, preferably at least 30 weight % of a sugar component based on the total weight (dry matter) of the binder components, more preferably at least 35 weight %, in particular at least 42 weight %.

A binder composition of this type results in numerous advantages over other binder types, in the context of a growth substrate product. For instance, the product exhibits higher re-saturation value and higher WC-10 (measure of water retention) than other commercially-used MMVF products suitable for use as growth substrates. Growth results are generally improved - for instance the choice of this particular binder leads to an increased number of reusable transplants when compared to other widely commercially-used growth substrates containing other binders.

In addition, it has been observed that the use of a mineral fibre product containing this type of binder can lead to improved efficiency of positioning of seeds in seed holes for propagation (it appears that fewer seeds "bounce out" of the seed holes during the automated positioning process) than in presently widely-used growth substrates. This greater accuracy of positioning of seeds in the present invention results in the grower having to spend less time repositioning seeds and fewer seeds are lost due to inaccurate positioning in the recess (leading to reduced labour costs). It also results in greater uniformity of environment across the set of seeds being grown, leading to greater uniformity of the end-product plants and generally healthier and stronger plants.

A further very significant advantage of the choice of the binder based on polycarboxylic acid component and alkanolamine component, optionally with sugar component, is that it can lead to increased compression strength relative to other known binders even at the same value of LOI. However, in the invention it is desirable to have a relatively high value of LOI and with this particular type of binder the high LOI can be achieved with a much lower risk of any damage to the growing plants as a result of components of the binder. In particular the inclusion of a high proportion of a sugar component ensures good binding properties but by the use of a component which is not found to be harmful to the plants.

The inclusion of a high proportion of a sugar component in the binder composition is especially useful in the context of use for growth substrates. The presence of the sugar tends to result in a browning on curing. This browning is advantageous for mineral wool growth substrates as it makes it easier for the grower to check the position of light-coloured seeds in the mineral wool growth substrate. Additionally, a brown-coloured mineral wool growth substrate is desirable for the end users as it has a closer resemblance to soil than light-coloured mineral wool growth substrates. At the same time the inclusion of sugar results in a binder that is more economical to produce, and more environmentally friendly, than one containing primarily the component (a) but without detrimental effects on the plant growth.

It is also found that the quality of this preferred binder combination is improved relative to products having low or no sugar component content, as the ageing properties are better.

In the present invention a binder composition is preferably used which contains components (a) and preferably also (b) as defined above. This composition is included in the product which is to be for use as a growth substrate and then cured, so that in the final product as used as a growth substrate the composition has been cured and so the components will have reacted. Thus the final product used as a growth substrate contains a cured binder obtained by curing of the defined binder composition containing components (a) and preferably also (b) and the components of the binder composition discussed below refer to the composition prior to curing.

The sugar component (b) employed in accordance with this preferred aspect of the present invention is preferably selected from sucrose and reducing sugars or mixtures thereof.

A reducing sugar is any sugar that, in solution, has an aldehyde or a ketone group which allows the sugar to act as a reducing agent. In the present invention, reducing sugars may be present in the uncured binder composition as such or as a carbohydrate compound that yields one or more reducing sugars *in situ* under thermal curing conditions. The sugar or carbohydrate compound may be monosaccharide in its aldose or ketose form, a disaccharide, a triose, a tetrose, a pentose, a hexose, or a heptose; or a di-, oligo- or polysaccharide; or combinations thereof. Specific examples are glucose (i.e. dextrose), starch hydrolysates such as corn syrup, arabinose, xylose, ribose, galactose, mannose, frustose, maltose, lactose and invert sugar.

Crystalline dextrose is normally produced by subjecting an aqueous slurry of starch to hydrolysis by means of heat, acid or enzymes. Depending on the reaction conditions employed in the hydrolysis of starch, a variety of mixtures of glucose and intermediates is obtained which may be characterized by their DE number. DE is an abbreviation for Dextrose Equivalent and is defined as the content of reducing sugars, expressed as the number of grams of anhydrous D-glucose per 100g of the dry matter in the sample, when determined by the method specified in International Standard ISO 5377-1981 (E). This method measures reducing end groups and attaches a DE of 100 to pure glucose (= dextrose) and a DE of 0 to pure starch.

Only glucose syrup of high DE can crystallize easily and yield a product in powder or granular form. A most popular crystallised product is dextrose monohydrate with application in medicine and chewing tablets. Dextrose monohydrate is pure glucose (DE 100).

With lower DE numbers, the syrup gradually loses its tendency to crystallise. Below approximately 45 DE, the syrup can be concentrated into a stable, non-crystallising liquid, for instance, Standard 42 DE syrup which finds wide spread use in canned fruit preserves, ice cream, bakery products, jam, candy, and all kinds of confectionery.

A preferred sugar component for use in the present invention is a reducing sugar having a dextrose equivalent DE of 40 to 100, preferably 50 to 100, and more preferably 86 to 100. Particularly preferred reducing sugar components are high DE glucose syrup, high-fructose syrup and mixtures thereof, for example dextrose sugar syrup Sirodex 331 or Sirodex 431, both from Syral.

However it is also possible to use sugar components having relatively low DE (e.g. between 45 and 55), when sucrose is used as the sugar component, which can be more economical.

The viscosity and the content of large polymers in a sugar syrup generally may decrease with an increasing DE value. A large content of polymers should preferably be avoided for an MMVF binder because this will provide a more sticky binder resulting in stickiness of the formed MMVF mat or binder-containing web to the manufacturing equipment such as e.g. the forming chamber walls, the travelling conveyors, rollers and pendulums.

The solubility of the binder solution containing a sugar syrup may increase with increasing DE value. The binder solution should be sufficiently water soluble to provide a homogenous distribution of the binder on the mineral fibres making up the mineral wool mat or web to be cured.

The quality of the binder is improved when a sugar component with a high DE number such as 40 to 100 is used. The solubility of the binder solution will increase with increased DE number of the sugar component. The binder solution must be sufficiently water soluble to provide a homogenous distribution on the fibres when making a growth substrate product to be cured.

A sugar syrup will generally result in a browning on curing which is more pronounced with increasing DE value. This browning is advantageous for MMVF growth substrates as it is easier to check the position of light coloured seeds in the mineral wool growth substrate. Additionally, a brown coloured mineral wool growth substrate is desirable for the end users as it has a closer resemblance to soil than light coloured mineral wool growth substrates.

The sugar component (b) is preferably present in the uncured binder composition in an amount of at least 42 % by weight based on the total weight (dry matter) of the binder components. The sugar component may be present in the uncured binder composition in an amount of 42-90% by weight based on the total weight (dry matter) of the binder components, preferably 42-75% by weight, more preferably 45-55% by weight. It can be at least 50% by weight and in some cases amounts of at least 60% are beneficial.

Component (a) comprises a reaction product of a polycarboxylic acid component and an alkanolamine component.

Preferably the alkanolamine component is selected from diethanolamine, triethanolamine, diisopropanolamine, triisopropanolamine, methyldiethanolamine, ethyldiethanolamine, n-butyldiethanolamine, methyldiisopropanolamine, ethyl-isopropanolamine, ethyldi-isopropanolamine, 3-amino-1,2-propanediol, 2-amino-1,3-propanediol and tris(hydroxymethyl)aminomethane. Most preferably the alkanolamine component is diethanolamine.

In this preferred binder composition there is present reaction product (a). However, in practice there is usually also some unreacted alkanolamine component present in the uncured binder composition.

The polycarboxylic acid component is generally selected from dicarboxylic, tricarboxylic, tetracarboxylic, pentacarboxylic, and like polycarboxylic acids, and anhydrides, salts and combinations thereof.

Preferred polycarboxylic acid components employed as starting materials for reacting with the other binder components are carboxylic anhydrides. The preferred carboxylic anhydride component may be selected from saturated or unsaturated aliphatic and cycloaliphatic anhydrides, aromatic anhydrides and mixtures thereof, preferably saturated or unsaturated cycloaliphatic anhydrides, aromatic anhydrides and mixtures thereof.

In a particularly preferred embodiment of the invention, two different anhydrides selected from cycloaliphatic and/or aromatic anhydrides are employed. Preferably these different anhydrides are reacted in sequence.

Preferably the carboxylic anhydride component comprises a combination of cycloaliphatic and aromatic anhydride. Preferably the carboxylic anhydride is selected from tetrahydrophthalic anhydride, hexahydrophthalic anhydride, methyltetrahydrophthalic anhydride, and nadic anhydride. Preferably the aromatic anhydride is selected from phthalic anhydride, methylphthalic anhydride, trimellitic anhydride and pyromellitic anhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

In the preferred polycarboxylic/alkanolamine based binder composition there is present the reaction product (a). However, in practice there is usually also some unreacted polycarboxylic acid component present in the uncured binder composition.

In the preparation of component (a), the proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least 0.6.

On the other hand, the properties of the final binder composition, such as curing behaviour, are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less. In general, the final binder composition has an equivalent ratio of (NH+OH)/(COOH) within the range of from 1.25 to 1.55.

The reaction between the alkanolamine and carboxylic anhydride reactants is carried out in known manner, for instance, as described in WO99/36368, WO01/05725, WO02/06178, WO2004/007615 and WO2006/061249. WO06/061249, WO08/020069, WO08/023032 and WO08/028923 all disclose a binder composition which comprises a reaction product of a alkanolamine and a carboxylic anhydride.

EP1521807 discloses the use of reactants of alkanolamine and carboxylic anhydride reaction products with glucose as a part of the binder.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, succinic acid, tartaric acid and trimellitic acid.

The reaction temperature is generally within the range from 50°C to 200°C. In a preferred embodiment, and in particular when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6. Furthermore, the addition of a base will cause at least partial neutralisation of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA) and triethanolamine (TEA). The base is preferably added to the reaction mixture after the reaction between the alkanolamine and the carboxylic anhydride has been active stopped by adding water.

Content of binder in the MMVF product can be the major contributing factor to the LOI value. For instance, total binder content in the upper layer and independently in any other layers can be at least 3 wt %, especially at least 3.2 wt %, in particular at least 3.5 wt % or even at least 4 wt %.

Preferably the amount of binder in the upper layer is at least 3.5 wt %. Preferably the amount of binder in the upper layer is at least 3.7 wt %, more preferably at least 3.9 wt %. It is generally not more than 5.3 wt %.

The amount of binder in any intermediate layers and in the lower layer is preferably also at least 3.5 wt %, more preferably at least 3.7 wt %, in particular at least 3.9 wt %. It is generally not more than 5.3 wt %.

The growth substrate product preferably comprises a wetting agent. This can be a conventional non-ionic surfactant but preferably the wetting agent is an ionic surfactant.

Preferably it is an anionic surfactant. Suitable anionic surfactants include salts (including, for example, sodium, potassium, ammonium and substituted ammonium salts such as mono-,di-and triethanolamine salts) of the anionic sulphate, sulphonate, carboxylate and sarcosinate surfactants. Other anionic surfactants include isethionates such as the acyl isethionates, N-acyl taurates, fatty acid amines of methyl tauride, alkyl succinates and sulfosuccinates, mono esters of sulfosuccinates, di-esters of sulfosuccinates and N-acyl sarcosinates. Preferred are anionic sulphate surfactants and anionic sulphonate surfactants, anionic carboxylate surfactants and anionic soap surfactants.

Particularly preferred are the anionic sulphonate surfactants such as linear or branched alkyl benzene sulphonates, alkyl ester sulphonates, primary or secondary alkylene sulphonates, olefin sulphonates, sulphonated polycarboxylic acids, alkyl glycerol sulphonates, fatty acyl glycerol sulphonates, fatty oleyl glycerol sulphonates and mixtures thereof.

Most preferably the anionic surfactant is a linear alkyl benzene sulphonate in which the alkyl chain has from 5 to 20 carbon atoms. The sodium and potassium salts are preferred. This type of surfactant provides particularly beneficial water distribution properties for growth substrates of relatively large height and also provides excellent re-saturation properties and does not lead to foaming problems in the irrigation water. Conventional non-ionic surfactants allow the growth substrate to take up water, but their water retaining capacity, water distribution over height and re-wetting properties are not as good as with this type of surfactant, preferred in the invention.

Preferably the alkyl chain length is in the range 8 to 16, and more preferably at least 90% of the chains are in the range 10 to 13 and more preferably at least 90% (by weight) are in the range 10 to 12.

Preferably the wetting agent comprises a linear alkyl benzene sulphonate and in this case the product is preferably produced by a method in which a polyol (such as monoethylene glycol) is included with the wetting agent in the mineral fibre product. The weight ratio of linear alkyl benzene sulphonate to monoethylene glycol (or other polyol - for instance propylene glycol or trimethylolpropane) is preferably 0.3:1 to 3.75:1, preferably 1:1 to 2:1. The polyol is normally evaporated during subsequent processing and curing and thus usually only trace amounts, if any, are present in the final product.

Alternatively, the ionic surfactant may be cationic or zwitterionic. Examples of cationic surfactants include quaternary ammonium surfactants. These can, for instance, be selected from mono C6 to mono C16, preferably C6 to C10 N-alkyl or alkenyl ammonium surfactants wherein the remaining N positions are substituted by groups such as methyl, hydroxyethyl and hydroxypropyl.

Suitable zwitterionic surfactants include derivatives of secondary and tertiary amines, derivatives of heterocyclic secondary and tertiary amines, or derivatives of quaternary ammonium, quaternary phosphonium or tertiary sulphonium compounds. Betaine and sultaine surfactants are examples of zwitterionic surfactants.

Preferably the amount (by weight) of ionic surfactant based on the weight of binder (dry matter) is in the range 0.01 to 5%, preferably 0.1 to 4%.

The ionic surfactant is present in the mineral fibre product in amounts preferably from 0.01 to 3% (by weight), based on mineral fibre product, more preferably 0.05 to 1%, in particular, 0.1 to 0.8%.

The binder compositions used in the present invention may additionally comprise one or more conventional binder additives. These include, for instance, curing accelerators such as, e.g. β-hydroxyalkylamides; the free acid and salt forms of phosphoric acid, hypophosphorous acid and phosphonic acid. Other strong acids such as boric acid, sulphuric acid, nitric acid and p-toluenesulphonic acid may also be used, either alone or in combination with the just-mentioned acids, in particular with phosphoric acid, hypophosphorous acid or phosphonic acid. Other suitable binder additives are ammonia; silane coupling agents such as γ-aminopropyltriethoxysilane; thermal stabilisers; UV stabilisers; plasticisers; anti-migration aids; coalescents; fillers and extenders such as clay, silicates and magnesium hydroxide; pigments such as titanium dioxide; flame retardants; corrosion inhibitors such as thiourea, urea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

The aqueous binder composition as applied to the mineral fibres generally has a solids content of from 1 to 30 wt.%, in particular 15 to 27 wt.%, especially 20 to 24 wt.%. Generally the aqueous binder composition has a pH of 5.5 or greater.

The growth method of the invention can be a method of growing a plant crop from a seed, such as a method of propagation, where the use of the products of the invention appears to be especially beneficial. In particular the method is beneficial in the case where seeds are introduced into seed holes in the substrate in an automated manner. It is found that the use of the binder system of the invention results in more efficient population of a large number of seed holes.

Positioning of the seed can be done in conventional manner. Accurate positioning is important and a preferred method is with the use of a seeder apparatus such as the Granette nozzle seeder (available from Visser).

The Granette seeder is a nozzle seeder with self-cleaning nozzles, which sows direct into the cell of the tray. Because of the many possible adjustments at the seeder in combination with the PSL-II index belt a very high accuracy is possible. The seeder has a double nozzle bar for sowing two rows of cells in a tray in one stroke. The vibrating nozzle bar will be positioned above the vibrating seed hopper, where the seeds will be picked up. By adjusting the time for picking up the seed, the amount of vacuum and the vibration intensity of the seed hopper and nozzle bar the desired result can be achieved. After picking up the seeds, the nozzle bar will be above the positioned tray, where the vacuum at the nozzles will be released so the seeds will drop into the centre of the cells of the tray. After dropping the seed, as the nozzle bar returns to the seed hopper, the nozzles are cleaned out by needles that come out of the nozzle-ends.

However, the method can alternatively be a method of propagation from a seedling or a method of growth to a later stage plant.

Methods and uses of the invention will generally include providing the growth substrate product, optionally wetting the product with water, positioning a seed or seedling within the recess (either alone or already within a smaller growth substrate product (within the recess, irrigating the growth substrate and allowing growth.

The growth substrate product of the invention can be made using conventional methods for production of dual-density MMVF products (for the first aspect of the invention and associated methods and uses). In general the growth substrate product can be made by a method comprising the steps of providing MMVF, spraying the MMVF with a binder composition, spraying the MMVF with a wetting agent if used, collecting and consolidating the MMVF, and curing the binder composition.

Suitable fibre formation methods and subsequent production steps for manufacturing the MMVF product are those conventional in the art. For instance the fibres are usually made by melting a mineral charge to form a mineral melt and fiberising the melt, by known means such as use of a cascade spinner (preferred) or use of spinning cup methods. This forms a cloud of airborne fibres.

Generally, the binder is sprayed, immediately after fiberisation of the mineral melt, onto the airborne mineral fibres. The binder composition is often supplied in the form of an aqueous composition.

The wetting agent is also sprayed onto the airborne mineral fibres. Spraying of the binder composition and the wetting agent is often done substantially simultaneously but can be done sequentially. The wetting agent and binder can be pre-mixed before spraying but they are usually sprayed separately.

After collection of the spray-coated MMV fibres as a web, the web is subjected to consolidation and treatment to generate the desired density, and a multiple-density product in the case of the product of the aspects of the invention which require multiple layers.

Methods of making a coherent dual-density MMVF matrix are also known. One method includes producing a consolidated web, splitting the web along a horizontal plane into two sub-webs and subjecting the sub-web intended to form the layer which is to have higher density to height compression in order to increase its density, and rejoining the two sub-webs.

Alternatively, a lower-density layer and a higher-density layer can be produced separately and then bonded together. Bonding can be with the use of a suitable binder or by mechanical fixing. In the case of separately-produced upper and lower layers it is possible to join together two layers having different fibre orientation. This can lead to particular advantages for specific crops.

Examples of methods for production of a dual density product are described in the following patent publications: WO94/16162; EP 741827A; WO97/36035; EP 111113A; WO03/042468; WO03/054264; and WO03/054270.

Analogous methods may be used for the provision of products having more than two layers with appropriate adaptation.

The spray-coated and consolidated MMVF web is generally cured in a curing oven, usually by means of a hot air stream. The hot air stream may be introduced into the mineral fibre web from below, or above or from alternating directions in distinctive zones in the length direction of the curing oven. Curing temperatures are chosen appropriately for the binder used. Generally curing is carried out at a temperature of at least 220°C. After curing, the cured binder composition binds the fibres to form a structurally coherent matrix of fibres.

In the invention it is preferred that a polymeric film wrapping is positioned in contact with the vertical sides of the growth substrate product, and is provided with perforations. This is found to lead to particularly good growth conditions for slow-growing crops such as peppers. The polymeric film wrapping may be formed of any type of polymer film known for wrapping of growth substrates, such as polyethylene film. A pre-perforated film can be applied to the growth substrate product, or the perforations may be formed once the film is in place on the product.

It will be appreciated by the skilled person that any of the preferred features of the invention may be combined as appropriate in order to produce a preferred method, product, binder composition or use of the invention within the scope of the invention defined by the appended claims. The following Examples are intended to further illustrate the invention.

### Example 1

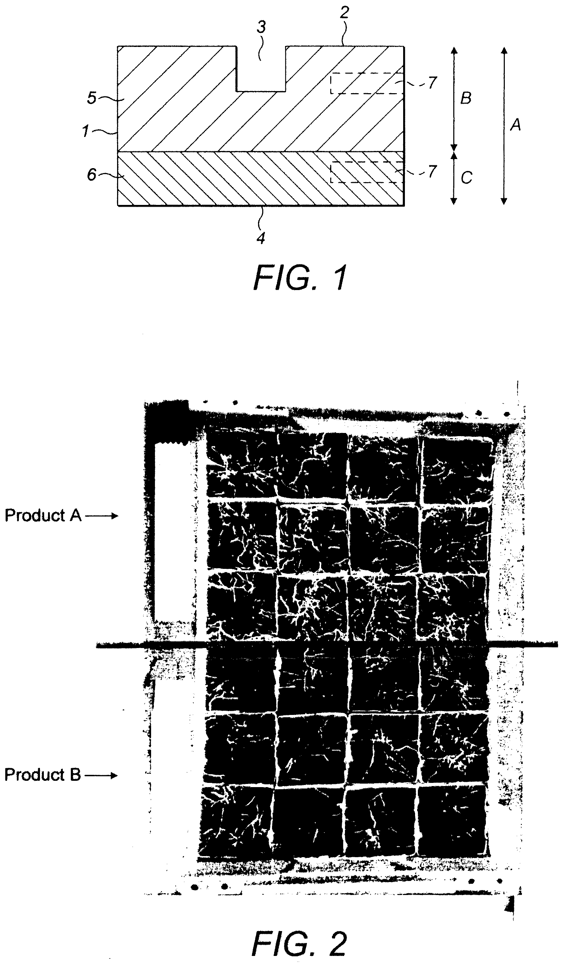

A product of the first aspect of the invention is illustrated in Figure 1. The product 1 is a coherent matrix of stone wool fibres. The product is in the form of a block of total height A and is formed of an upper layer 5 of height B and a lower layer 6 of height C. For instance, the total height A could be 55mm, with the height B of the upper layer being 35mm and the height C of the lower layer being 20mm. The product is provided with air holes 7 extending into the block, one in the upper layer and one in the lower layer. The average density of the product as a whole is around 70kg/m³ and the value of LOI in both layers is 4.5 wt %. In this embodiment there is a recess 3 at the upper surface 2 which is wholly within the upper layer. In this example the upper layer has density 60kg/m³ and the density of the lower layer can range from 75 to 80kg/m³. The product has a length of 100mm and a width of 100mm and is of a cuboid shape.

In use, a seed, or seedling contained within a smaller growth substrate product, is positioned within the recess to allow growth. The product rests, in use, on its lower surface 4. This may be positioned during the growth period on any suitable surface which enables the block to be irrigated.

The binder is formed from a blend of 50 wt % (b) sugar component (glucose) and 50 wt % (a) reaction product of polycarboxylic acid component and alkanolamine component. The matrix also contains wetting agent. Details of production of the matrix are given below.

### Preparation of binder component (a)

158g of diethanolamine (DEA) are placed in a 1-litre glass reactor provided with a stirrer and a heating/cooling jacket. The temperature of the diethanolamine is raised to 60°C whereafter 91g of tetrahydrophthalic anhydride (THPA) are added. After raising the temperature and keeping it at 130°C, a second portion of 46g of tetrahydrophthalic anhydride is added followed by 86g of trimellitic anhydride (TMA). After reacting at 130°C for 1 hour, the mixture is cooled to 95°C and 210g of water added and the mixture stirred for 1 hour. After cooling to ambient temperature, the obtained resin is ready for use.

The solids content of the binder is 58%.

Larger amounts of the binder component resin (a) are prepared for the binder compositions following the above procedure.

### Preparation of binder composition

3000 litres binder composition is prepared by first mixing 515 litres resin (a) binder component with 141 litres ammonia, 22 litres hypophosphorous acid and 9.2 litre standard silane (gamma-aminopropyltriethoxysilane). Afterwards, this mixture is mixed with 601 litres sugar component (a), Sirodex 431 from Syral.

Finally, this binder mixture is diluted with water to 22% solids and further diluted before use.

Larger amounts of the binder composition can be prepared for the production of the growth substrates by following the above procedure.

### Preparation of wetting agent

Linear alkyl benzene sulphonate anionic surfactant and monoethylene glycol are mixed in a 1.25:1 ratio to produce wetting agent (LAS/MEG)

### Preparation of products of the invention (hereinafter Product 1)

The binder composition is prepared as described above. This binder composition (at an appropriate rate so as to achieve the quoted LOI values) and the prepared wetting agent (at a rate of 5.7 litres wetting agent/ton mineral wool) are fed into a cascade spinner and sprayed onto mineral fibres. The coated fibres are then collected on transport conveyors.

The collected web of coated fibres is subjected to a process of horizontal splitting and compression of the lower layer to the desired density. The upper and lower layers are then rejoined and the product as a whole is transported to a curing oven for curing at 275°C for 5 to 15 minutes to form the MMVF product. This product is then cut into blocks of the desired shape and size and the recesses drilled into the upper surfaces.

### Example 2

A comparison was made between growth substrate blocks according to the invention and a commercially available growth substrate block not according to any aspect of the invention. This commercially available substrate block is used industrially as a substrate for the growth of pepper plants and has density 75kg/m³ throughout.

Both blocks were used as a substrate for the growth of pepper plants and the resulting root growth is shown in Figure 2. In the top half of the figure, shown as Product A, the blocks used are dual-density blocks according to the invention. In the lower half of the figure, marked as Product B, the growth substrate is a mono-density block not according to the invention.

It can be seen that there is greater plant mass and faster root development in the case of Product A according to the invention.

### Example 3

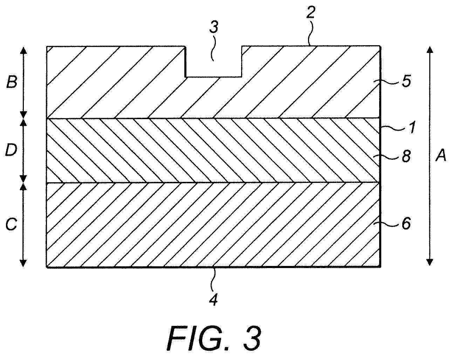

A product of the aspect of the invention according to claim 11 is illustrated in Figure 3. The product 1 is a coherent matrix of stone wool fibres. The product is in the form of a block of total height A and is formed of an upper layer 5 of height B, a lower layer 6 of height C, and an intermediate layer 8 of height D. The total height A is 75mm, with the height B of the upper layer being 25mm, the height C of the lower layer being 25mm, and the height D of the intermediate layer being 25mm. The value of LOI in all layers is 3.5 wt %. In this embodiment there is a recess 3 at the upper surface 2 which is wholly within the upper layer. In this example the upper layer has density 45kg/m³, the density of the lower layer is 55kg/m³ and the density of the intermediate layer is 60kg/m³. The product has a length of 100mm and a width of 100mm and is of a cuboid shape.

In use, a seed or seedling contained within a smaller growth substrate product, is positioned within the recess 3 to allow growth. The product rests, in use, on its lower surface 4. This may be positioned during the growth period on any suitable surface which enables the block to be irrigated.

The binder is formed from a blend of 50 wt % (b) sugar component (glucose) and 50 wt % (a) reaction product of polycarboxylic acid component and alkanolamine component. The matrix also contains wetting agent. These are produced as described in Example 1. The product is produced in analogous manner to the product of Example 1, except that when the collected web of coated fibres is subjected to a process of horizontal splitting it is split into three layers and both the intermediate layer and the lower layer are compressed to the desired density. The layers are then rejoined and the product as a whole is transported to a curing oven for curing at 275°C for 5 to 15 minutes to form the MMVF product. This product is then cut into blocks of the desired shape and size and the recesses drilled into the upper surface.

## Claims

1. A growth substrate product formed of a coherent matrix of man-made vitreous fibres (MMVF) bonded with binder, having an upper surface (2) provided with a recess (3) adapted to receive a seed or seedling and an opposite lower surface (4) on which the product rests when in use,
the product being formed of at least two layers including an upper layer (5) positioned at the upper surface and having a first density and a lower layer (6) positioned at the opposite lower surface and having a second density, wherein the first density is less than the second density by at least 5 kg/m³ wherein the loss on ignition (LOI) in the upper layer is at least 3.5 wt %;
and wherein the second density is in the range 65 to 90 kg/m³.

2. A growth substrate product according to claim 1 wherein the binder is a cured binder formed of a composition which, prior to curing, comprises a) a sugar component, and b) a reaction product of a polycarboxylic acid component and an alkanolamine component.

3. A growth substrate product according to claim 1 or claim 2 wherein the MMVF are stone wool fibres.

4. A growth substrate product according to any preceding claim in which the first density is in the range 50 to 70 kg/m³.

5. A growth substrate product according to any preceding claim in which the first and second densities differ by at least 10 kg/m³.

6. A growth substrate product according to any preceding claim in which the LOI in the upper layer is at least 3.7 wt %.

7. A growth substrate product according to any preceding claim having side surfaces covered with a film formed of an air-impermeable material which has been provided with perforations.

8. A growth substrate product according to any preceding claim in which the upper layer forms a greater part of the thickness of the product than does the lower layer.

9. A growth substrate product according to any preceding claim having a height in the range 4 to 10 cm, preferably not more than 8 cm.

10. A growth substrate product according to any preceding claim having a volume in the range 400 to 1200cm³, preferably about 850 cm³.

11. A growth substrate product formed of a coherent matrix of man-made vitreous fibres (MMVF) bonded with binder, having an upper surface (2) provided with a recess (3) adapted to receive a seed or seedling and an opposite lower surface (4) on which the product rests when in use, wherein the product is formed of at least three layers including an upper layer (5) positioned at the upper surface and having a first density in the range 35 to 50 kg/m³ and a lower layer (6) positioned at the opposite lower surface and having a second density in the range 45 to 60 kg/m³ and an intermediate layer (8) positioned between the upper and lower layers and having a density in the range 55 to 70 kg/m³, wherein the first density is less than the second density by at least 5 kg/m³ and wherein the loss on ignition (LOI) in the upper layer is at least 3.5 wt %.

12. Use of a growth substrate product according to any of claims 1 to 11 as a substrate for the growth of a plant crop.

13. Use according to claim 12 in which the crop is pepper.

14. A method of growing a plant crop comprising providing a growth substrate product according to any of claims 1 to 11, positioning a seed or seedling in the recess and allowing growth.

15. A method according to claim 14 in which the crop is pepper.

## Patentansprüche

1. Wachstumssubstratprodukt, ausgebildet aus einer kohärenten Matrix aus künstlichen Glasfasern (*man-made vitreous fibres-* MMVF), die mit einem Bindemittel verklebt sind, Folgendes aufweisend: eine obere Oberfläche (2), die mit einer Vertiefung (3) versehen ist, die angepasst ist, einen Samen oder Sämling aufzunehmen, und eine gegenüberliegende untere Oberfläche (4), auf der das Produkt liegt, wenn es in Verwendung ist,
wobei das Produkt aus wenigstens zwei Schichten ausgebildet ist, die eine obere Schicht (5), die an der oberen Oberfläche angeordnet ist und eine erste Dichte aufweist, und eine untere Schicht (6), die an der gegenüberliegenden unteren Oberfläche angeordnet ist und eine zweite Dichte aufweist, enthalten, wobei die erste Dichte um wenigstens 5 kg/m³ geringer ist als die zweite Dichte, wobei der Glühverlust (*loss on ignition* - LOI) in der oberen Schicht wenigstens 3,5 Gew.-% beträgt;
und wobei die zweite Dichte im Bereich von 65 bis 90 kg/m³ liegt.

2. Wachstumssubstratprodukt nach Anspruch 1, wobei das Bindemittel ein ausgehärtetes Bindemittel ist, ausgebildet aus einer Zusammensetzung, die vor dem Aushärten eine a) Zuckerkomponente und b) ein Reaktionsprodukt einer Polycarbonsäurekomponente und einer Alkanolaminkomponente umfasst.

3. Wachstumssubstratprodukt nach Anspruch 1 oder 2, wobei die MMVF Steinwollfasern sind.

4. Wachstumssubstratprodukt nach einem der vorhergehenden Ansprüche, wobei die erste Dichte im Bereich von 50 bis 70 kg/m³ liegt.

5. Wachstumssubstratprodukt nach einem der vorhergehenden Ansprüche, wobei die erste und die zweite Dichte um wenigstens 10 kg/m³ voneinander verschieden sind.

6. Wachstumssubstratprodukt nach einem der vorhergehenden Ansprüche, wobei der LOI in der oberen Schicht wenigstens 3,7 Gew.-% beträgt.

7. Wachstumssubstratprodukt nach einem der vorhergehenden Ansprüche, wobei Seitenoberflächen mit einem Film bedeckt sind, der aus einem luftundurchlässigen Material, das mit Perforationen versehen worden ist, ausgebildet ist.

8. Wachstumssubstratprodukt nach einem der vorhergehenden Ansprüche, wobei die obere Schicht einen größeren Teil der Dicke des Produkts ausbildet als die untere Schicht.

9. Wachstumssubstratprodukt nach einem der vorhergehenden Ansprüche mit einer Höhe im Bereich von 4 bis 10 cm, vorzugsweise nicht mehr als 8 cm.

10. Wachstumssubstratprodukt nach einem der vorhergehenden Ansprüche mit einem Volumen im Bereich von 400 bis 1200 cm³, vorzugsweise etwa 850 cm³.

11. Wachstumssubstratprodukt, ausgebildet aus einer kohärenten Matrix aus künstlichen Glasfasern (MMVF), die mit einem Bindemittel verklebt sind, Folgendes aufweisend: eine obere Oberfläche (2), die mit einer Vertiefung (3) versehen ist, die angepasst ist, einen Samen oder Sämling aufzunehmen, und eine gegenüberliegende untere Oberfläche (4), auf der das Produkt liegt, wenn es in Verwendung ist, wobei das Produkt aus wenigstens drei Schichten ausgebildet ist, Folgendes enthaltend: eine obere Schicht (5), die an der oberen Oberfläche angeordnet ist und eine erste Dichte im Bereich von 35 bis 50 kg/m³ aufweist, und eine untere Schicht (6), die an der gegenüberliegenden unteren Oberfläche angeordnet ist und eine zweite Dichte im Bereich von 45 bis 60 kg/m³ aufweist, und eine Zwischenschicht (8), die zwischen der oberen und der unteren Schicht angeordnet ist und eine Dichte im Bereich von 55 bis 70 kg/m³ aufweist, wobei die erste Dichte um wenigstens 5 kg/m³ geringer ist als die zweite Dichte und wobei der Glühverlust (LOI) in der oberen Schicht wenigstens 3,5 Gew.-% beträgt.

12. Verwendung eines Wachstumssubstratprodukts nach einem der Ansprüche 1 bis 11 als ein Substrat für das Wachstum einer Kulturpflanze.

13. Verwendung nach Anspruch 12, wobei es sich bei der Kultur um Paprika handelt.

14. Verfahren zum Züchten einer Kulturpflanze, umfassend das Bereitstellen eines Wachstumssubstratprodukts nach einem der Ansprüche 1 bis 11, Anordnen eines Samens oder Sämlings in der Vertiefung und Ermöglichen von Wachstum.

15. Verfahren nach Anspruch 14, wobei es sich bei der Kultur um Paprika handelt.

## Revendications

1. Produit de substrat de croissance constitué d'une matrice cohérente de fibres vitreuses artificielles (FVA) liées par un liant, ayant une surface supérieure (2) présentant un évidement (3) conçu pour accueillir une graine ou un semis et une surface inférieure opposée (4) sur laquelle le produit repose lors de d'utilisation,
le produit étant constitué d'au moins deux couches comprenant une couche supérieure (5) positionnée au niveau de la surface supérieure et ayant une première densité et une couche inférieure (6) positionnée au niveau de la surface inférieure opposée et ayant une deuxième densité, dans lequel la première densité est inférieure à la deuxième densité d'au moins 5 kg/m³, dans lequel la perte au feu (LOI) dans la couche supérieure est au moins de 3,5 % en poids ;
et dans lequel la deuxième densité est dans la plage comprise entre 65 et 90 kg/m³.

2. Produit de substrat de croissance selon la revendication 1 dans lequel le liant est un liant durci constitué d'une composition qui, avant le durcissement, comprend a) une composante à base de sucre, et b) un produit de réaction d'une composante d'acide polycarboxylique et d'une composante d'alcanolamine.

3. Produit de substrat de croissance selon la revendication 1 ou la revendication 2 dans lequel les FVA sont des fibres de laine de roche.

4. Produit de substrat de croissance selon l'une quelconque des revendications précédentes dans lequel la première densité est dans la plage comprise entre 50 et 70 kg/m³.

5. Produit de substrat de croissance selon l'une quelconque des revendications précédentes dans lequel la première et la deuxième densités diffèrent d'au moins 10 kg/m³.

6. Produit de substrat de croissance selon l'une quelconque des revendications précédentes dans lequel la LOI dans la couche supérieure est au moins de 3,7 % en poids.

7. Produit de substrat de croissance selon l'une quelconque des revendications précédentes présentant des surfaces latérales couvertes d'un film constitué d'un matériau imperméable à l'air qui a été doté de perforations.

8. Produit de substrat de croissance selon l'une quelconque des revendications précédentes dans lequel la couche supérieure représente une partie majoritaire de l'épaisseur du produit contrairement à la couche inférieure.

9. Produit de substrat de croissance selon l'une quelconque des revendications précédentes ayant une hauteur dans la plage comprise entre 4 et 10 cm, de préférence inférieure ou égale à 8 cm.

10. Produit de substrat de croissance selon l'une quelconque des revendications précédentes ayant un volume dans la plage comprise entre 400 et 1 200 cm³, de préférence d'environ 850 cm³.

11. Produit de substrat de croissance constitué d'une matrice cohérente de fibres vitreuses artificielles (FVA) liées par un liant, ayant une surface supérieure (2) présentant un évidement (3) conçu pour accueillir une graine ou un semis et une surface inférieure opposée (4) sur laquelle le produit repose lors de d'utilisation, le produit étant constitué d'au moins trois couches comprenant une couche supérieure (5) positionnée au niveau de la surface supérieure et ayant une première densité dans la plage comprise entre 35 et 50 kg/m³ et une couche inférieure (6) positionnée au niveau de la surface inférieure opposée et ayant une deuxième densité dans la plage comprise entre 45 et 60 kg/m³ et une couche intermédiaire (8) positionnée entre les couches supérieure et inférieure et ayant une densité dans la plage comprise entre 55 et 70 kg/m³, dans lequel la première densité est inférieure à la deuxième densité d'au moins 5 kg/m³ et dans lequel la perte au feu (LOI) dans la couche supérieure est au moins de 3,5 % en poids.

12. Utilisation d'un produit de substrat de croissance selon l'une quelconque des revendications 1 à 11 comme substrat pour la croissance d'une culture de plante.

13. Utilisation selon la revendication 12 dans laquelle la culture est du poivre.

14. Procédé de croissance d'une culture de plante consistant à fournir un produit de substrat de croissance selon l'une quelconque des revendications 1 à 11, à positionner une graine ou un semis dans l'évidement et à permettre la croissance.

15. Procédé selon la revendication 14 dans lequel la culture est du poivre.
